(19) Europäisches Patentamt
European Patent Office
Office européen des brevets

(11) **EP 2 779 085 A1**

(12) **EUROPEAN PATENT APPLICATION**
published in accordance with Art. 153(4) EPC

(43) Date of publication:
**17.09.2014 Bulletin 2014/38**

(21) Application number: **12848342.7**

(22) Date of filing: **08.11.2012**

(51) Int Cl.:
**G06Q 50/06** (2012.01)     **H02J 3/00** (2006.01)
**H02J 13/00** (2006.01)

(86) International application number:
**PCT/JP2012/078922**

(87) International publication number:
**WO 2013/069717 (16.05.2013 Gazette 2013/20)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.11.2011 JP 2011246821**

(71) Applicant: **Kabushiki Kaisha Toshiba
Minato-ku
Tokyo 105-8001 (JP)**

(72) Inventors:
• **OBARA, Reiko**
  **Tokyo 105-8801 (JP)**
• **NODA, Hideki**
  **Tokyo 105-8801 (JP)**
• **KOBAYASHI, Takenori**
  **Tokyo 105-8801 (JP)**
• **ISOGAI, Taichi**
  **Tokyo 105-8801 (JP)**
• **YAMADA, Takahiro**
  **Tokyo 105-8801 (JP)**

(74) Representative: **HOFFMANN EITLE
Patent- und Rechtsanwälte
Arabellastrasse 4
81925 München (DE)**

(54) **OPERATION PLANNING SYSTEM AND METHOD FOR CREATING OPERATION PLAN**

(57)     An operation planning system and an operation schedule planning method are provided which create an operation schedule to attempt reducing an environmental load in consideration of an acceptable range of consumers. A power supply curve S matching one of the patterns of a demand curve D stored in advance is created by combining power generation quantities of various power sources. An environmental load index Ep to a supply quantity indicated by the supply curve S is calculated based on environmental load information stored in advance. Next, reducible quantity information for each power consumption reduction characteristic of each consumer is stored in advance, a necessary reduction quantity to cause the supply curve S to match a predetermined curve is calculated. A reducible supply quantity is calculated based on reducible quantity information, and a reducible index Dp obtained by dividing the reducible supply quantity by the necessary reduction quantity is calculated. Next, the supply curve S is adjusted until it is determined that both environmental load index Ep and the reducible index Dp are within respective certain ranges.

FIG. 9

**Description**

TECHNICAL FIELD

Embodiments of the present disclosure relates to an operation planning system that predicts a power demand and creates operation schedules of various power sources, and a method for creating an operation schedule executed by the same.

BACKGROUND ART

Power is generated based on the rule of balancing. That is, with respect to power, a demand and a supply should be equal, and a power generation quantity and a power consumption quantity should be the same quantity. When the demand/supply of power becomes unbalanced, a frequency and a voltage become varied, which may cause a false operation of electrical equipment. Hence, electricity companies predict the demand for power in advance, and create operation schedules of various power sources, such as renewable energy power generation including solar power generation, geothermal power generation, and wind power generation, nuclear power generation, water power generation, thermal power generation, and geothermal power generation, based on the prediction result.
In recent years, in accordance with an increase of fuel costs and an increase in an interest to the environment, constraints in view of the environment in power systems, such as a constraint to an emission of environmental load substances represented by a $CO_2$ emission quantity, and an assessment in accordance with the emission quantity are becoming further important. Hence, in near future, it is expected that a creation of an operation schedule becomes necessary which simply matches a demand/supply curve in consideration of economical costs but which also reduces the emission of environmental load substances as minimum as possible.
In order to create an operation schedule that reduces the emission of environmental load substances as minimum as possible, example relevant technologies already proposed are a scheme of causing a consumer to effectively utilize a time slot at which the $CO_2$ emission quantity is little, a scheme of controlling an operation schedule in accordance with a balancing among a power generation, a power storage, and a load, a scheme of suppressing an initial cost of a system construction, and creating an optimized operation schedule in view of the economic efficiency and the environment, and a scheme of operating distributed power sources so as to reduce the total $CO_2$ emission quantity.

CITATION LIST

PATENT LITERATURES

Patent Document 1: JP 2010-28879 A

Patent Document 2: JP 2010-124644 A

Patent Document 3: JP 2009-131045 A

Patent Document 4: JP 2006-288016 A

SUMMARY

TECHNICAL PROBLEM

Nowadays, a large number of operation-schedule creating schemes have been proposed in consideration of a reduction of the environmental load. However, some schemes are to systematically control the power usage of each consumer in accordance with a supply condition at a supplier's end upon introduction of successive information relevant apparatuses and power storage facilities inherent to a smart technology, and an adverse effect to the consumers originating from a supply restriction is not taken into consideration at all. That is, the possibility that the consumer can decrease the power consumption is hardly taken into consideration, but only a reduction of the environmental load is taken into consideration to set supply curve, and the consumers forcibly accept such a supply curve. However, it is substantially impossible for the supplier to completely ignore the consumers, and the actual practice of such technologies is ineffective.
In addition, a supply curve is set in accordance with a predicted demand, but there is also a scheme of promoting the consumers to take a power-saving activities in such a way that the demand does not exceed the supply curve. According to this scheme, however, the power saving tendency of the consumers is still unclear, and thus it is possible to merely create an operation schedule which does not increase the environmental load, and it is difficult to create an operation schedule which actively decreases the environmental load.

That is, according to the conventional technologies, it is difficult to create an operation schedule which considers the acceptable range of the consumers who forcibly participate power saving, and which sets a specific target value of of a reduction of the environmental load.

Embodiments of the present disclosure have been made in order to address the aforementioned technical problems, and it is an objective of the present disclosure to provide an operation planning system and an operation schedule creating method that can create an operation schedule to reduce an environmental load in consideration of the acceptable range of consumers.

## SOLUTION TO PROBLEM

To accomplish the above objective, embodiments of the present disclosure provides an operation planning system that includes: a pattern memory that stores each pattern of a power demand curve; a supply quantity setter that combines power generation quantities of various power sources to create a power supply curve matching one of the patterns; a load information memory that stores pieces of environmental load information of the various power sources; a load index calculator that calculates, based on the environmental load information, an environmental load index to a supply quantity indicated by the supply curve; a characteristic memory that stores, for each power consumption reduction characteristic of each consumer, reducible quantity information; a necessary reduction quantity calculator that calculates a necessary reduction quantity to cause the supply curve to match a predetermined curve; a reducible quantity calculator that calculates a reducible supply quantity based on the reducible quantity information; a reducible index calculator that calculates a reducible index obtained by dividing the reducible supply quantity by the necessary reduction quantity; a determiner that determines whether or not the environmental load index and the reducible index are both within respective certain ranges; and a supply curve adjuster that adjusts the supply curve until a determination result to an effect that both indexes are within the respective certain ranges is obtained from the determiner.

To accomplish the above objective, embodiments of the present disclosure also provides a method for creating an operation schedule, the method including: storing in advance each pattern of a power demand curve; combining power generation quantities of various power sources to create a power supply curve matching one of the patterns; storing in advance pieces of environmental load information of the various power sources; calculating, based on the environmental load information, an environmental load index to a supply quantity indicated by the supply curve; storing, for each power consumption reduction characteristic of each consumer, reducible quantity information in advance; calculating a necessary reduction quantity to cause the supply curve to match a predetermined curve; calculating a reducible supply quantity based on the reducible quantity information; calculating a reducible index obtained by dividing the reducible supply quantity by the necessary reduction quantity; determining whether or not the environmental load index and the reducible index are both within respective certain ranges; and adjusting the supply curve until a determination result to an effect that both indexes are within the respective certain ranges is obtained.

## BRIEF DESCRIPTION OF DRAWINGS

FIG. 1 is a block diagram illustrating a general structure of an operation planning system according to a first embodiment;
FIG. 2 is a graph illustrating a supply curve and an ideal curve;
FIG. 3 is a graph illustrating a reducible quantity;
FIG. 4 is a block diagram illustrating a detailed structure of a demand quantity setter;
FIG. 5 is a graph illustrating a demand curve;
FIG. 6 illustrates various conditions associated with patterns of a demand curve;
FIG. 7 is a block diagram illustrating a detailed structure of a supply quantity setter;
FIGS. 8A and 8B are tables each illustrating power generation quantities of various power sources indicated by a supply curve;
FIG. 9 is a block diagram illustrating a detailed structure of a supply quantity adjuster;
FIG. 10 is an exemplary diagram illustrating an example screen for an operation schedule output by a presenter;
FIG. 11 is a flowchart illustrating an operation of the operation planning system; and
FIG. 12 is a block diagram illustrating a structure of an operation planning system according to a second embodiment.

DESCRIPTION OF EMBODIMENTS

Several embodiments for an operation planning system and an operation schedule creating method executed by the same will be explained in detail with reference to the accompanying drawings.

[First Embodiment]

(General Structure)

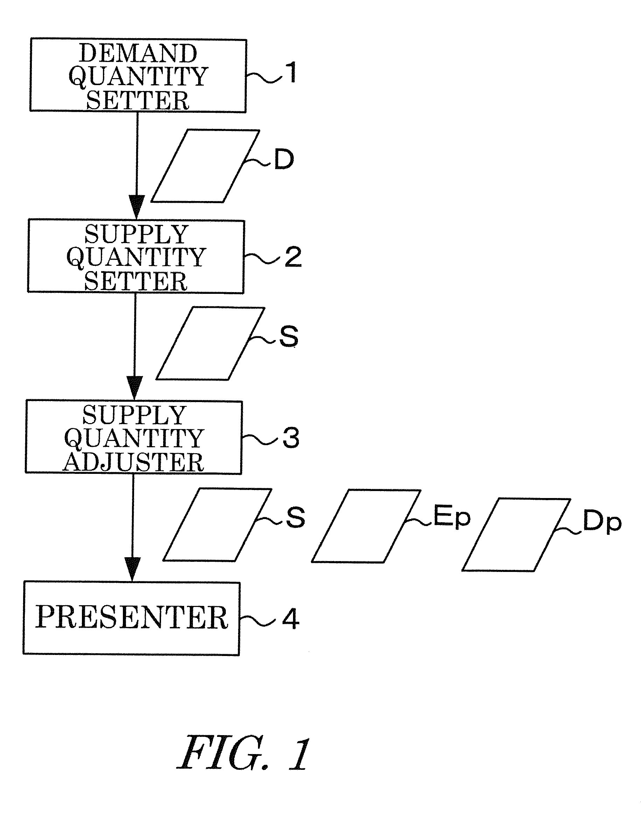

FIG. 1 is a block diagram illustrating a general structure of an operation planning system according to a first embodiment. The operation planning system illustrated in FIG. 1 is a single computer or distributed computers, allows a CPU to execute a process in accordance with a program stored in advance, and includes a demand quantity setter 1, a supply quantity setter 2, a supply quantity adjuster 3, and a presenter 4.

This operation planning system creates an operation schedule that adjusts a supply quantity in such a way that a reducible index Ds does not become equal to or smaller than a certain value while suppressing an environmental load index Ep to be equal to or smaller than a certain level upon reduction of a supply and also suppressing power saving forced to consumers and originating from the supply reduction to be within an acceptable range, thereby accomplishing a balancing with a demand as needed.

The environmental load index Ep is a value indicating the environmental load originating from power generation tracing a supply curve S, and is, for example, a $CO_2$ emission quantity. In addition, such an index may be an NOx emission quantity, an SOx emission quantity, and a dioxin emission quantity. The reducible index Dp is a rate of reducible quantity relative to a necessary reduction quantity of power supply. The necessary reduction quantity is a reduction quantity when the events at the consumers' end are ignored and simply the environmental load is taken into consideration. The reducible quantity is a quantity of power reducible by an effort made by consumers and a cooperation through a contract, etc.

That is, the demand quantity setter 1 outputs, in accordance with various conditions affecting the power demand, a demand curve D having a demand quantity in each time slot represented in time series. The supply quantity setter 3 combines the power generation quantities of various power sources for each time slot, thereby creating the supply curve S matching the demand curve D. The supply quantity adjuster 3 adjusts the supply curve S in such a way that the environmental load index Ep and the reducible index Dp remain within certain ranges. The presenter 4 outputs the supply curve S, the environmental load index Ep, and the reducible index Dp in a visible manner on a screen, etc.

(Reducible Index)

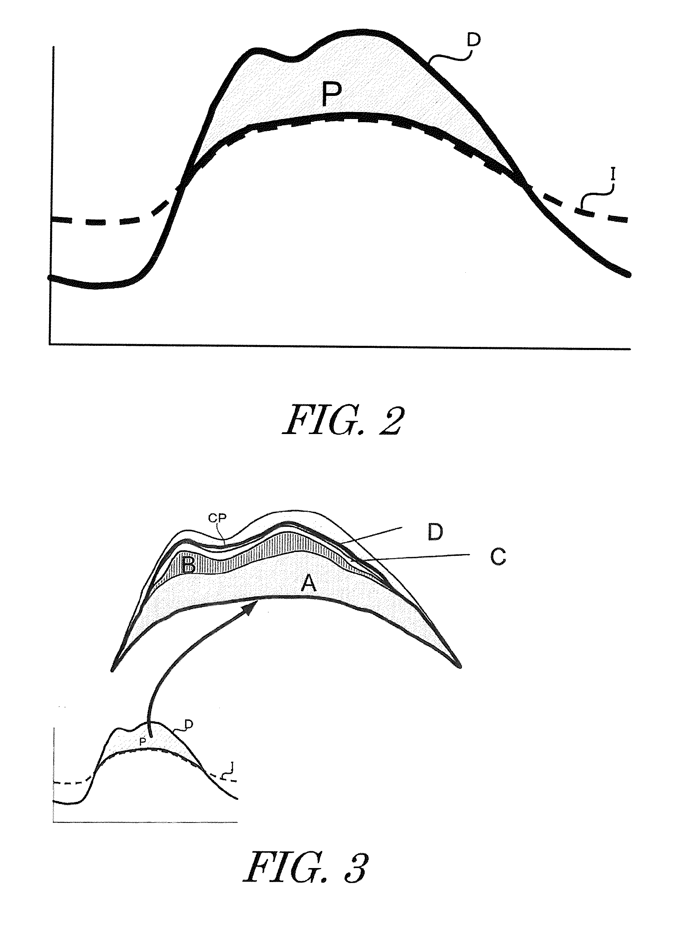

The reducible index Dp is calculated as follow. First, as illustrated in FIG. 2, an ideal curve I indicating an ideal supply quantity simply in consideration of the environmental load is estimated. The ideal curve I is a supply curve based on an estimation that, for example, power generation in the night when a $CO_2$ emission basic unit is low is increased to store energy in power storages, and a demand in the daytime is satisfied by power generation in the daytime and the discharge by the power storages. The power storages are, for example, batteries, pumped-storage power generation, and others.

Next, an area of a region P surrounded by the ideal curve I and the supply curve S when the supply curve S exceeds the ideal curve I is calculated. When an ideal number of power storages are not provided, the area of this region P is the necessary reduction quantity P.

Next, as illustrated in FIG. 3, reducible quantities A to D are calculated in view of various aspects, and some of or all of the reducible quantities are totaled to obtain a final reducible quantity CP. For example, various reducible quantities per a unit time in view of various aspects are calculated through the following formulae (1) to (4), and the final reducible quantity CP is obtained through a formula (5).

[Formula 1]

$$an = \sum_{m=1}^{qa1} a1p + \sum_{m=1}^{qa2} a2p + \cdots$$

Formula (1)

where:

m is a number of households;
qa1 is a number of contracted households with contract form a1;

qa2 is a number of contracted households with contract form a2;

a1p is a reduced power quantity by households with contract form a1; and

a2p is a reduced power quantity by households with contract form a2.

This reducible quantity an has a set time slot and a set rate, and is an expected power quantity as reducible based on a contract that permits a reduction of a supply quantity at the set rate in the set time slot. The differences between the contract form a1 and the contract form a2 are the set time slot and the set rate.

[Formula 2]

$$bn = \sum_{m=1}^{qb} bp$$

Formula (2)

where:

m is a number of households;

qb is a number of households that can accept a power-supply stop operation; and

bp is a reduced power quantity by households upon power-supply stop operation.

This reducible quantity bn has a set time slot, and is an expected power quantity as reducible based on a contract or a law that permits a reduction of the power supply to be zero in the set time slot. For example, this reducible quantity bn corresponds to a supply quantity to consumers other than governmental sectors, public facilities, and industrial facilities, etc. , which must have a supply ensured in advance at the time of emergency in developing countries, etc. In addition, this reducible quantity bn corresponds to a supply quantity to a consumer that accepts a reduction of the power supply to be zero when absent due to a trip, etc.

[Formula 3]

$$cn = \sum_{m=1}^{qc1} c1p + \sum_{m=1}^{qc2} c2p + \sum_{m=1}^{qc3} c3p$$

Formula (3)

where:

m is a number of households;

qc1 is a number of households in a group with a progressive response characteristic;

qc2 is a number of households in a group with an intermediate response characteristic;

qc3 is a number of households in a group with a conservative response characteristic;

c1p is a reduced power quantity by households in a group with a progressive response characteristic;

c2p is a reduced power quantity by households in a group with an intermediate response characteristic;

c3p is a reduced power quantity by households in a group with a conservative response characteristic.

This reducible quantity cn is an expected power quantity that can be voluntarily reduced in response to, when an announcement to the effect that the status of power supply is tight is made, that announcement. The announcement is made through a smart meter, an HEMS (Home Energy Management System), a television, a radio, an electronic bulletin board, and the Internet. The group with a progressive response characteristic is a group of consumers who are highly likely to heavily assist power saving in response to the announcement. The group with a conservative response characteristic is a group of consumers who are not likely to respond to the announcement. The group with an intermediate response characteristic is a group between the group with a progressive response characteristic and the group with a conservative response characteristic. The number of groups can be increased in accordance with the intensity of the response.

[Formula 4]

$$dn = \sum_{m=1}^{qd1} d1p + \sum_{m=1}^{qd2} d2p + \sum_{m=1}^{qd3} d3p$$

Formula (4)

where:

m is a number of households;
qd1 is a number of households in a group with a progressive provided-information response;
qd2 is a number of households in a group with an intermediate provided-information response;
qd3 is a number of households in a group with a conservative provided-information response;
d1p is a reduced power quantity by households in the group with a progressive provided-information response;
d2p is a reduced power quantity by households in the group with an intermediate provided-information response;
d3p is a reduced power quantity by households in the group with a conservative provided-information response.

This reducible quantity dn is an expected power quantity that can be voluntarily reduced in response to, when an objective announcement as to the status of power supply like a quantitative value of a power usage rate, etc. , is made, that announcement. The group with a progressive provided-information response is a group of consumers who are highly likely to assist power saving in response to the announcement. The group with a conservative provided-information response is a group of consumers who are not likely to respond to the announcement. The group with an intermediate provided-information response is a group between the group with a progressive provided-information response and the group with a conservative provided-information response. The number of groups can be increased in accordance with the intensity of the response.

[Formula 5]

$$CP = \sum_{n=1}^{24} an + \sum_{n=1}^{24} bn + \sum_{n=1}^{24} cn + \sum_{n=1}^{24} dn$$

Formula (5)

where CP is a reducible quantity

As is indicated by the formula (5), the reducible quantity CP is calculated by integrating the reducible quantities an to dn per a unit time by a predetermined time period, and totaling the results. In the case of the formula (5), the unit time is one hour, and the predetermined time period is one day. The unit time may be set to be other times, such as 30 minutes and two hours, and the predetermined time period can be set to be other periods like one week.

When the reducible quantity CP and the necessary reduction quantity P are calculated, as is indicated in the following formula (6), the reducible quantity CP is divided by the necessary reduction quantity P, and the result is taken as the reducible index Dp.

[Formula 6]

$$Dp = CP / P$$

Formula (6)

The operation planning system subtracts the reduction quantity from the reducible quantity CP and the supply quantity indicted by the supply curve S to adjust the supply curve S, and calculates the reducible index Dp and the environmental load index Ep based on the adjustment result. Next, the supply curve S where the reducible index Dp and the environmental load index Ep are within certain ranges is obtained, and is output by the presenter 4 in a visible manner.

(Detailed Structure)

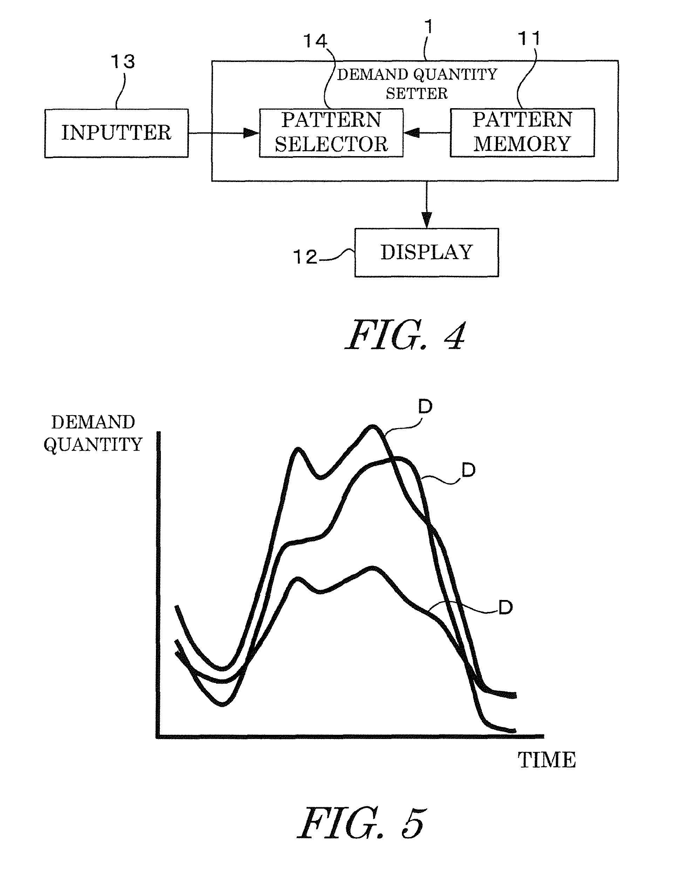

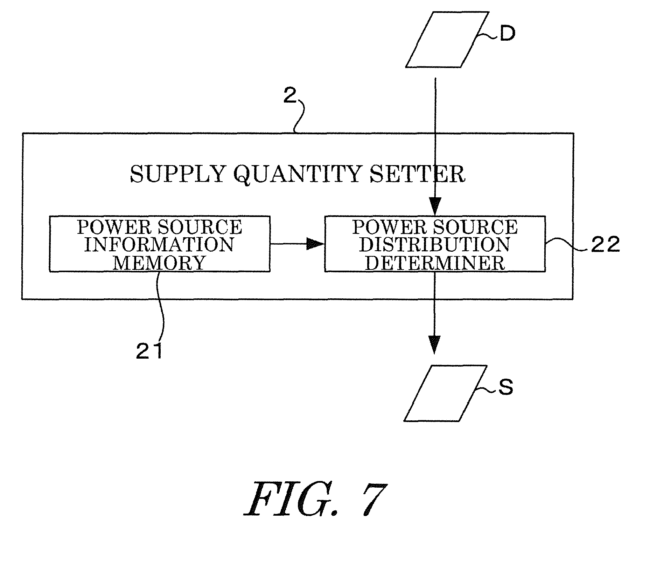

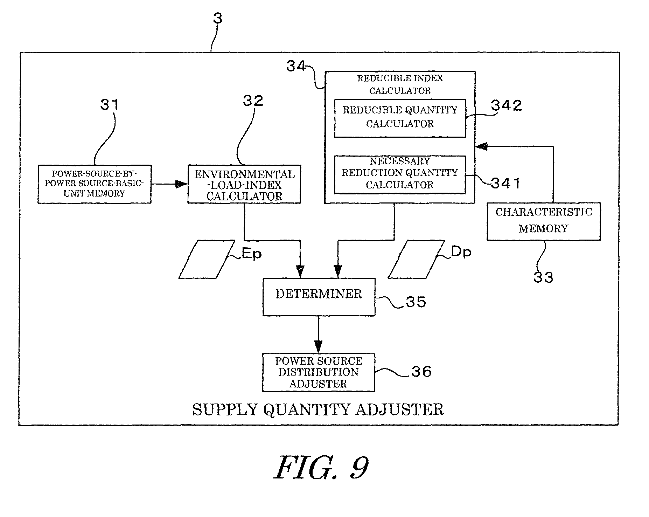

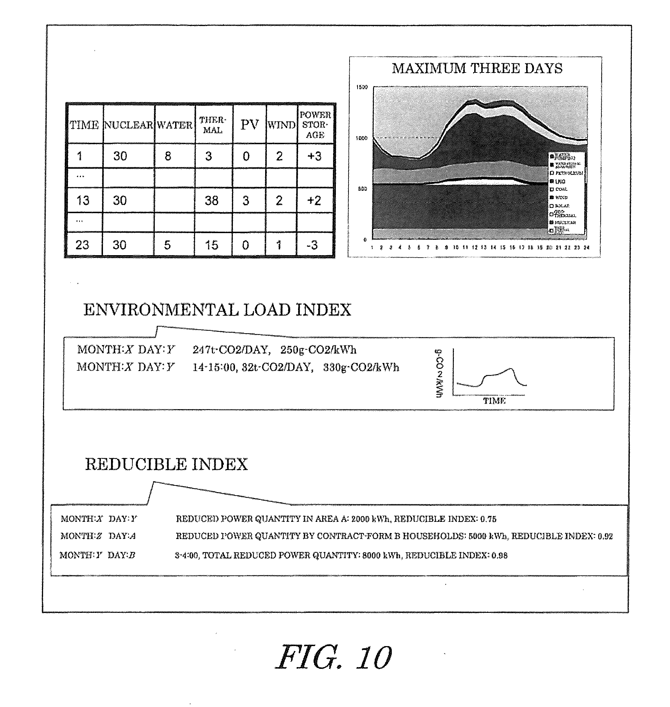

The detailed structure of each element of such an operation planning system will be explained with reference to FIGS. 4 to 9. FIG. 4 is a block diagram illustrating the detailed structure of the demand quantity setter 1, and FIG. 7 is a block diagram illustrating the detailed structure of the supply quantity setter 2. FIG. 9 is a block diagram illustrating the detailed structure of the supply quantity adjuster 3, and FIG. 10 is an exemplary diagram illustrating an example screen of an operation schedule output by the presenter 4.

(Demand Quantity Setter)

As illustrated in FIG. 4, the demand quantity setter 1 that outputs a demand curve D includes a pattern memory 11, a display 12, an inputter 13, and a pattern selector 14.

The pattern memory 11 includes a memory medium like an HDD, and as illustrated in FIG. 5, stores various patterns of the demand curve D. Each pattern of the demand curve D stored in the pattern memory 11 includes data on a demand quantity for each time slot. Each pattern reflects the expected demand curve D classified in accordance with various conditions. Each pattern is associated with conditions corresponding to such a pattern.

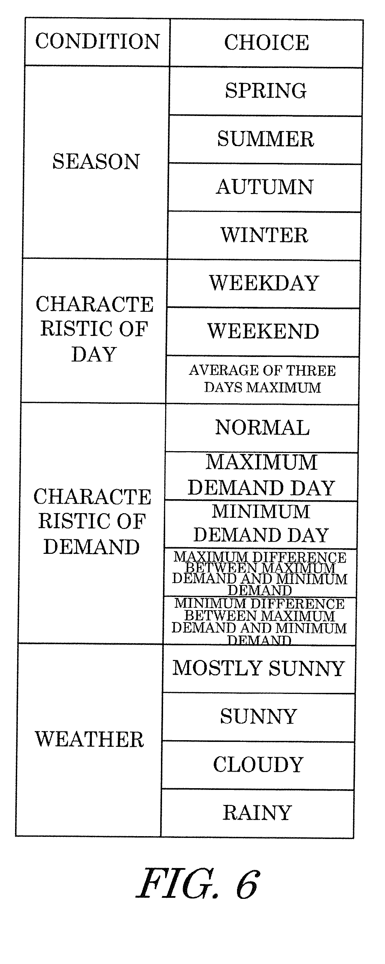

FIG. 6 illustrates various conditions associated with each pattern. Each pattern of the demand curve D is associated with respective choices of a season, a characteristic of a day, a characteristic of a demand, and a weather, one by one. The choices of the season are spring, summer, autumn, and winter, and the choices of the day are a weekday, a weekend, and an average day of three days at maximum. The average day of three days at maximum is a day obtained by extracting the maximum power of a day in each month by upper rank three days, and averaging the power quantities thereof. The characteristic of the demand is, for example, normal, a maximum demand day, a minimum demand day, a maximum difference between the maximum demand and the minimum demand, or a minimum difference between the maximum demand and the minimum demand. The weather is mostly sunny, sunny, cloudy or rainy, etc.

The display 12 is a display device like with a screen of liquid crystal, CRT or organic EL, etc. The display 12 displays a GUI operation screen displaying various conditions associated with each pattern of the demand curve D. The inputter is input interfaces including a keyboard, a mouse, or a touch panel, and the GUI operation screen on the display is operable in accordance with an input given to the inputter. When, for example, an area of a radio button displayed so as to correspond to a condition is clicked by the mouse, this condition is selected.

The pattern selector 14 mainly includes a CPU and a drive controller, and reads, from the pattern memory 11, the pattern of the demand curve D associated with a combination of the conditions selected through a man-machine interface that is the inputter 13 and the display 12.

(Supply Quantity Setter)

As illustrated in FIG. 7, the supply quantity setter 2 that creates the supply curve S in accordance with the demand curve D includes a power source information memory 21 and a power source distribution determiner 22.

The power source information memory 21 includes a memory medium like an HDD, and stores data on at least the operating rate of each power source, the power generation efficiency under each condition, and the rated power generation quantity. Each power source is, for example, nuclear, water, thermal, geothermal, and a renewable energy power generation, such as solar power generation, heat power generation, or wind power generation. The power generation efficiency under each condition is, for example, an efficiency relative to the maximum power generation quantity of solar power generation for each weather.

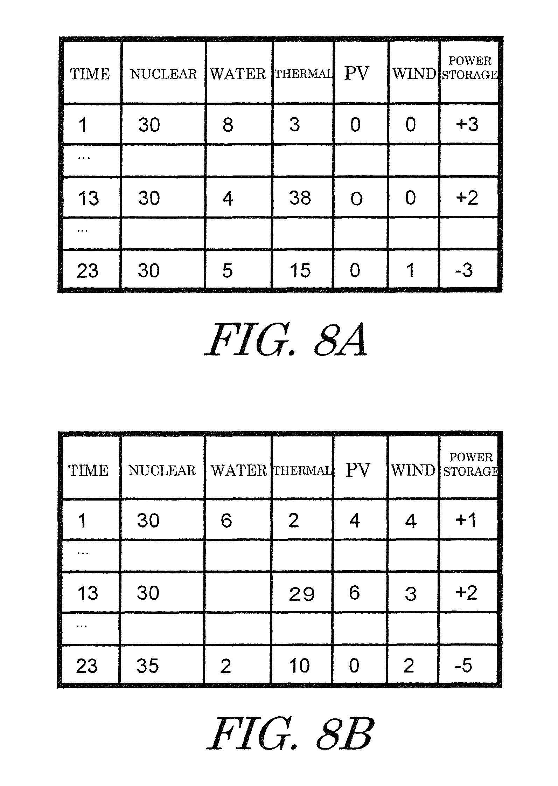

The power source distribution determiner 22 mainly includes a CPU, and creates the supply curve S in consideration of data on the weather, the availability, the economical cost, and the power storing condition with reference to information on various power sources stored in the power source information memory 21. More specifically, as illustrated in FIGS. 8A and 8B, the power quantity to be generated by each power source for each time slot is combined so as to match the demand quantity for each time slot indicated by the demand curve D output by the demand quantity setter 1. That is, data on the supply curve S includes data on the power generation quantities of various power sources for each time slot.

FIG. 8A indicates a power source distribution when the weather is rainy and there is substantially no wind. Hence, it is difficult to count on the power generation quantities of a solar power generation PV and a wind power generation. However, this is compensated by a thermal power generation. FIG. 8B indicates a power source distribution when the weather is mostly sunny and there is wind, the power generation quantities by the solar power generation PV and the wind power generation are counted largely, but the thermal power generation is reduced by what corresponds to the expected power generation by the solar power generation and the like.

(Supply Quantity Adjuster)

As illustrated in FIG. 9, the supply quantity adjuster 3 that adjusts the supply curve S in such a way that the environmental load index Ep and the reducible index Dp are within certain ranges includes a power-source-by-power-source-basic-unit memory 31, an environmental-load-index calculator 32, a characteristic memory 33, a reducible index calculator 34, a determiner 35, and a power source distribution adjuster 36.

The power-source-by-power-source-basic-unit memory 31 includes a memory medium like an HDD, and stores

a $CO_2$ basic unit for each power source. The $CO_2$ basic unit is a $CO_2$ emission quantity per 1 kWh.

The environmental-load-index calculator 32 mainly includes a CPU, and calculates the environmental load index Ep. The environmental-load-index calculator 32 multiplies the power generation quantities of various power sources in the data on the supply curve S by the $CO_2$ basic unit for each power source, and calculates, as the environmental load index Ep, the total $CO_2$ emission quantity per a predetermined time period. The example predetermined time period is a day, a week, or a month. The environmental load index may be the $CO_2$ emission quantity per kWh instead of the total $CO_2$ emission quantity.

The characteristic memory 33 includes a memory medium like an HDD, and stores information on the reducible quantities an to dn for each power consumption reducing characteristic for each consumer. Information on the reducible quantities an to dn are respective parameters to calculate the reducible quantities an to dn.

That is, in order to calculate the reducible quantity an, the number of contracted households qa1 with the contract form a1, the number of contracted households qa2 with the contract form a2, the reduced power quantity a1p by the households with the contract form a1, and the reduced power quantity a2p by the households with the contract form a2 are stored.

In addition, in order to calculate the reducible quantity bn, the number of households qb that can accept a power-supply stop operation, and the reduced power quantity bp by the households through a power-supply stop operation.

Still further, in order to calculate the reducible quantity cn, the number of households qc1 in a group with a progressive response characteristic, the number of households qc2 in a group with an intermediate response characteristic, the number of households qc3 in a group with a conservative response characteristic, the reduced power quantity c1p by the households in the group with the progressive response characteristic, the reduced power quantity c2p by the households in the group with the intermediate response characteristic, and the reduced power quantity c3p by the households in the group with a conservative response characteristic are stored.

Yet further, in order to calculate the reducible quantity dn, the number of households qd1 in a group with a progressive provided-information response, the number of households qd2 in a group with an intermediate provided-information response, the number of households qd3 in a group with a conservative provided-information response, the reduced power quantity d1p by the households in the group with a progressive provided-information response, the reduced power quantity d2p by the households in the group with an intermediate provided-information response, and the reduced power quantity d3p by the households in the group with a conservative provided-information response are stored.

The reducible index calculator 34 mainly includes a CPU and a memory medium like an HDD, and calculates the reducible index Dp. That is, the reducible index calculator 34 first includes a necessary reduction quantity calculator 341 that stores the ideal curve I indicating an ideal supply quantity for each time slot in advance, and calculates the necessary reduction quantity P based on the ideal curve I and the demand curve D. In addition, the reducible index calculator secondary includes a reducible quantity calculator 342 that calculates the reducible quantities an to dn with reference to the characteristic memory 34, and totals the results to calculate the reducible quantity CP. In addition, the reducible index calculator 34 divides the reducible quantity CP by the necessary reduction quantity P to obtain the reducible index Dp.

The determiner 35 mainly includes a CPU and a memory medium like an HDD, and determines whether or not the environmental index Ep is within a certain range, and the reducible index Dp is within a certain range. More specifically, the determiner 35 stores a comparison value of the environmental load index Ep and a comparison value of the reducible index Dp in advance, compares the environmental load index Ep with a corresponding comparison value, and compares the reducible index Dp with a corresponding comparison value.

The comparison value may be an upper or lower limit value indicating a range, or may be a value at a point indicating a threshold. For example, the comparison value for the environmental load index Ep may be an upper limit value acceptable as the $CO_2$ emission quantity, and the reducible index Dp may be an upper limit value as a value that must be accomplished minimally, or a lower limit value merely as a target.

In this case, when the environmental load index Ep is lower than the comparison value, and the reducible index Dp is within a range between the upper limit and the lower limit, the determiner 35 outputs information to the effect that a result is good. In order to aim the maximum $CO_2$ reduction quantity within a range where consumers are not dissatisfied, the determiner may output information to the effect that a result is good when the reducible index Dp matches the lower limit value or the threshold.

The power source distribution adjuster 36 mainly includes a CPU, and adjusts the supply curve S in accordance with a result of the determiner 35. More specifically, when the determiner 35 outputs an excess value of the environmental load index Ep, the power source distribution adjuster multiplies the highest $CO_2$ basic unit among the $CO_2$ basic units of respective power sources by the excess value, and creates the supply curve S having the scheduled power generation quantity of the power source with that $CO_2$ basic unit decreased by what corresponds to the multiplication result.

Conversely, in order to accomplish the maximum $CO_2$ reduction quantity within a range in which the consumers are not dissatisfied, the power source distribution adjuster 36 may obtain the reduction value of the supply quantity through a reverse calculation based on the excess value having the reducible index Dp exceeding the lower limit value, and may create the supply curve S having the scheduled power generation quantity of the power source with the highest $CO_2$ basic unit decreased by what corresponds to the reduction value. The power source subjected to a reduction of the power generation quantity may be selected with reference to, in addition to the $CO_2$ basic unit, economical costs, etc.

(Presenter)

The presenter 4 is a display having a liquid crystal, CRT, or organic EL screen, and displays the created operation schedule. FIG. 10 illustrates an example display of the operation schedule. As illustrated in FIG. 10, the presenter displays a supply quantity, the environmental load index Ep, and the reducible index Dp. The supply quantity is displayed in the form of a table or a graph, and includes the scheduled power generation quantity for each time slot and for each power source. The environmental load index Ep is displayed as the total $CO_2$ emission quantity per a day and per a unit time, and the $CO_2$ emission quantity per a unit power quantity. The reducible index Dp is displayed for each specific household, area, contract form, and time slot.

(Operation)

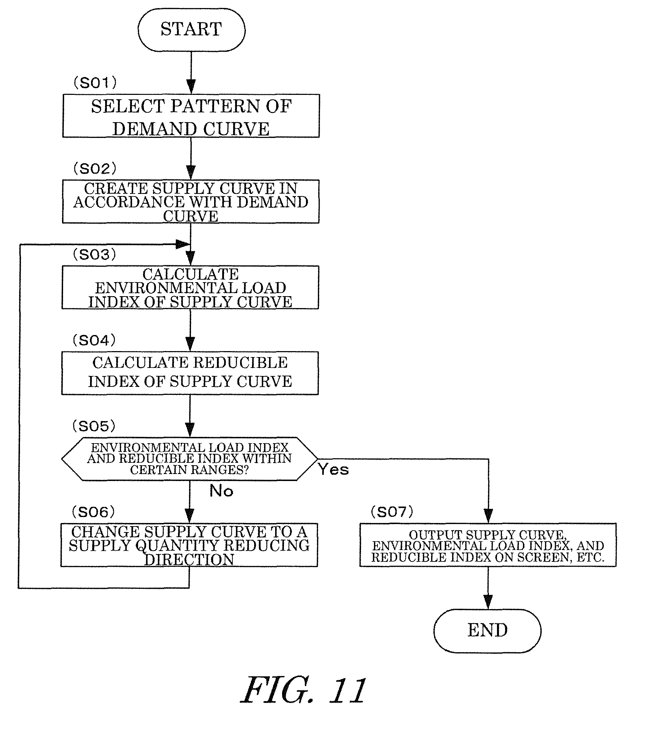

An explanation will be given of an operation of such an operation planning system with reference to FIG. 11. FIG. 11 is a flowchart illustrating an operation of the operation planning system.

First, the demand quantity setter 1 selects (step S01) a pattern of the demand curve D associated with a condition input by the user through the inputter 13. More specifically, the display 12 displays the GUI operation screen for selecting conditions associated with each pattern of the demand curve D. When the user inputs the condition through the inputter 13, the pattern selector 14 reads, from the pattern memory 11, the pattern of the demand curve D associated with the combination of such conditions.

When the pattern of the demand curve D is read, the supply quantity setter 2 creates (step S02) the supply curve S matching the demand curve D selected by the demand quantity setter 1. More specifically, the power source distribution determiner 22 reads information on each power source from the power source information memory 21, accumulates the power quantity to be generated by each power source for each time slot to cause the supply curve S to match with the demand curve D.

Next, the environmental-load-index calculator 32 of the supply quantity adjuster 3 calculates (step S03) the environmental load index Ep relative to the supply curve S. More specifically, the power generation quantity of each power source in the data of the supply curve S is multiplied by the $CO_2$ basic unit for each power source to calculate a total $CO_2$ emission quantity.

In addition, the reducible index calculator 34 of the supply quantity adjuster 3 calculates (step S04) the reducible index Dp relative to the supply curve S. More specifically, first, the necessary reduction quantity P is calculated based on a difference in the supply quantity between the ideal curve I stored in advance and the supply curve S. Next, with reference to the characteristic memory 33, the reducible quantities an to dn in various aspects are calculated. Subsequently, the reducible quantities an to dn per this time are integrated by a predetermined time period, and the results are further totaled to calculate the reducible quantity CP. Next, the reducible quantity CP is divided by the necessary reduction quantity P to obtain the reducible index Dp.

When the environmental load index Ep and the reducible index Dp are calculated, the determiner 35 determines (step S05) whether or not the environmental load index Ep and the reducible index Dp are within respective certain ranges. More specifically, the determiner 35 compares the environmental load index Ep with a comparison value. Upon the comparison, when the environmental load index Ep is lower than the comparison value, information to the effect that the environmental load index Ep is good is output. In addition, the determiner 35 compares the reducible index Dp with the upper limit value and the lower limit value. When the reducible index Dp is between the upper limit value and the lower limit value, the determiner 35 outputs information to the effect that the reducible index Dp is good.

When both of information to the effect that the environmental load index Ep is good and information to the effect that the reducible index Dp is good are not output (step S05: NO), the power source distribution adjuster 36 changes (step S06) the supply curve S in a direction in which the supply quantity decreases. More specifically, a new supply curve S having a power generation quantity of a certain one or multiple power sources in various power sources decreased is created.

When the power source distribution adjuster 36 creates the new supply curve S, the process returns to the step S03 again, the environmental load index Ep is calculated, the reducible index Dp is calculated, and the determination on the environmental load index Ep and the reducible index Dp is performed. The steps S03 to S06 are repeated until pieces of information to the effect that both environmental load index Ep and the reducible index Dp are good are output (step S05: YES).

When pieces of information to the effect that both environmental load index Ep an reducible index Dp are good are output (step S05: YES), the presenter 4 outputs (step S07), on the screen, the supply curve S created at last, the environmental load index Ep and reducible index Dp thereof in a visible manner.

(Advantageous Effects)

As explained above, according to this embodiment, first, the respective patterns of the power demand curve D are stored in advance, and the power generation quantities of various power sources are combined to create the power supply curve S matching one of the patterns. Second, the environmental load information of various power sources are stored in advance, and the environmental load index Ep relative to the supply quantity indicated by the supply curve S is calculated based on the environmental load information. Third, the reducible quantity information for each power consumption reducing characteristic of each consumer is stored in advance, a necessary reduction quantity to cause the supply curve S to match a predetermined curve is calculated, a reducible supply quantity is calculated based on the reducible quantity information, and the reducible index Dp obtained by dividing the reducible quantity by the necessary reduction quantity is calculated. Next, it is determined whether or not the environmental load index Ep and the reducible index Dp are within respective certain ranges, and the supply curve S is adjusted until the determination results show that those indexes are within the certain ranges.

As explained above, according to the operation planning system of this embodiment, the reducible index Dp is taken into consideration when the supply curve S is created. The reducible index Dp is a value obtained by dividing the reducible quantity by the necessary reduction quantity, and indicates the consumer how much there is a leeway for power saving in the form of a ratio relative to the necessary reduction quantity. The smaller the reducible index Dp becomes, the greater the consumer is forced to save power. Conversely, when the reducible index Dp is within the certain range, the necessary and sufficient matching with the demand is established. That is, the reducible index Dp indicates the matching with the demand, and according to this operation planning system, both matching with the demand and environmental load are accomplished.

Hence, according to this operation planning system and the operation schedule creating method, a reduction of the environmental load can be aimed under a condition in which the matching with the demand is fulfilled, and thus a workable operation schedule can be created.

In addition, since the operation schedule is workable providing the matching with the demand, the $CO_2$ emission quantity calculated from the supply curve thereof becomes quite similar to the actual value. Hence, introduction of this operation planning system enables an establishment of a $CO_2$ emission right trading market with a credibility.

Still further, the reducible quantity bn has a set time slot, and is an expected power quantity as being reducible based on a contract or a law that permit a reduction of the power supply to be zero in that time slot. When the reducible index is created based on this reducible quantity bn, the supply quantity to consumers other than governmental sectors, public facilities, and industrial facilities, etc., which must have a supply ensured in advance at the time of emergency in developing countries, etc., can be subjected to a reduction. Hence, when a sufficient power supply quantity is not ensured in comparison with developed countries such that, in a developing country or region not fully developed yet, the operation availability of power generation facilities is low and the efficiency of each device is poor, an operation schedule that can forcibly stop a supply in accordance with a situation can be created.

[Second Embodiment]

(Structure)

Next, a detailed explanation will be given of an operation planning system and an operation schedule creating method according to a second embodiment with reference to the accompanying drawings. The same structure as that of the first embodiment will be denoted by the same reference numeral, and the detailed explanation thereof will be omitted.

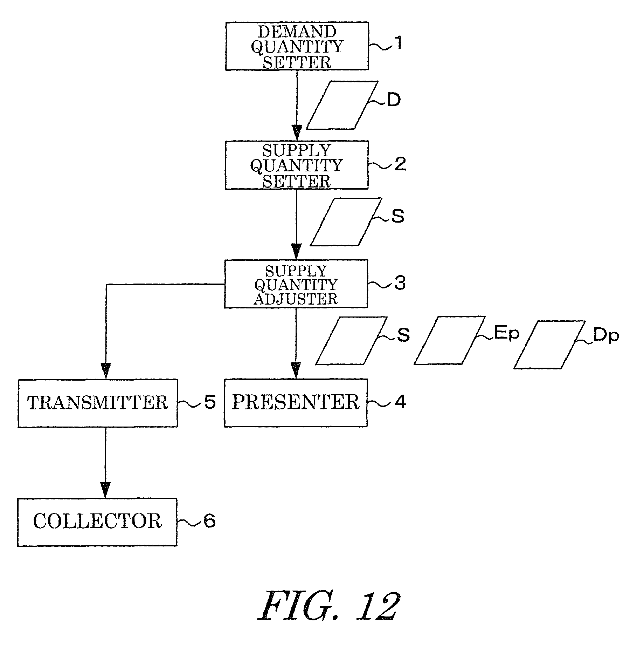

FIG. 12 is a block diagram illustrating a structure of an operation planning system according to the second embodiment. As illustrated in FIG. 12, this operation planning system includes a transmitter 5 and a collector 6.

The transmitter 5 includes a CPU and a network adapter, and transmits messages to absorb the opinions of the consumers to each consumer. This message is an inquiry as to whether or not the power consumption that should be suppressed by the consumers is realizable. The power consumption that should be suppressed by the consumers is, in other words, a supply quantity reduced through an adjustment by the supply curve adjuster, and is a quantity allocated to the consumers.

The collector 6 includes a CPU and a network adapter, receives the results that are the collected opinions of the consumers, and gathers the opinions.

The consumer has the terminal installed so as to be connected to a network, and the message transmitted by the transmitter is received by this terminal, and is displayed on a monitor. The terminal is provided with an inputter including a keyboard and a mouse, etc., and thus the consumer is capable of inputting a practical power reduction quantity. The power reduction quantity input by the consumer is transmitted as a gatherer opinion result to the network, and is received by the collector 6.

Next, the collector 6 totals all of the received power reduction quantities, and outputs, as gathered opinion result, the total quantity to the power source distribution adjuster 36. The power source distribution adjuster 36 creates the supply curve S having the supply quantity reduced by what corresponds to the reducible quantity when the reducible quantity indicated by the gathered opinion result is given as a feedback. The created supply curve S is subjected to a calculation and a determination of the environmental load index Ep and the reducible index Dp like the first embodiment.

In addition, a contrastive value to the environmental load index Ep and the reducible index Dp may be set or a restriction to the ranges thereof may be set in accordance with the gathered opinion result information output by the collector 6, and a preference level to the environmental load index Ep and the reducible index Dp may be set.

(Advantageous Effects)

As explained above, according to this embodiment, the power consumption quantity to be suppressed by the consumers based on the supply curve S is transmitted to the terminals of the consumers connected with the network, and the power reduction quantities practical for the consumers and transmitted from the terminals are totaled. In adjustment of the supply curve S, the supply curve S is adjusted again based on the totaled power reduction quantities.

Hence, it becomes possible to cope with an occasional activity pattern of the consumer beyond the information stored in the characteristic memory 33, and the preference changing case by case. Therefore, a matching with the demand can be further enhanced.

[Other Embodiments]

Several embodiments of the present disclosure were explained in this specification, but those embodiments are merely presented as examples, and are not intended to limit the scope and spirit of the present disclosure. More specifically, a combination of all of or a part of the first and second embodiments is also within the scope and spirit of the present disclosure. The above-explained embodiments can be carried out in various other forms, and permit various omissions, replacements, and modifications without departing from the scope and spirit of the present disclosure. Such embodiments and modifications thereof are within the scope and spirit of the present disclosure, and also within an equivalent range to the subject matter as recited in appended claims.

REFERENCE SIGNS LIST

| | |
|---|---|
| 1 | Demand quantity setter |
| 11 | Pattern memory |
| 12 | Display |
| 13 | Inputter |
| 14 | Pattern selector |
| 2 | Supply quantity setter |
| 21 | Power source information memory |
| 22 | Power source distribution determiner |
| 3 | Supply quantity adjuster |
| 31 | Power-source-by-power-source-basic-unit memory |
| 32 | Environmental-load-index calculator |
| 33 | Characteristic memory |
| 34 | Reducible index calculator |
| 341 | Necessary reduction quantity calculator |
| 342 | Reducible quantity calculator |
| 35 | Determiner |
| 36 | Power source distribution adjuster |
| 4 | Presenter |
| 5 | Transmitter |
| 6 | Collector |
| D | Demand curve |
| S | Supply curve |

Ep    Environmental load index
Dp    Reducible index
I     Ideal curve

**Claims**

1.  An operation planning system comprising:

    a pattern memory storing each pattern of a power demand curve;
    a supply quantity setter creating a power supply curve matching one of the patterns by combining power generation quantities of various power sources;
    a load information memory storing pieces of environmental load information of the various power sources;
    a load index calculator calculating, based on the environmental load information, an environmental load index to a supply quantity indicated by the supply curve;
    a characteristic into memory storing, for each power consumption reduction characteristic of each consumer, reducible quantity information;
    a necessary reduction quantity calculator calculating a necessary reduction quantity for the supply curve to match a predetermined curve;
    a reducible quantity calculator calculating a reducible supply quantity based on the reducible quantity information;
    a reducible index calculator calculating a reducible index obtained by dividing the reducible supply quantity by the necessary reduction quantity;
    a determiner determining whether or not the environmental load index and the reducible index are both within respective certain ranges; and
    a supply curve adjuster adjusting the supply curve until a determination result to an effect that both indexes are within the respective certain ranges is obtained from the determiner.

2.  The operation planning system according to claim 1, further comprising:

    a reducible quantity checker transmitting a power consumption quantity to be suppressed by the consumer to a terminal thereof connected with a network based on the supply curve adjusted by the supply curve adjuster; and
    a reducible quantity collector totaling practical power reduction quantities for the consumers and transmitted from the terminals thereof,
    wherein the supply curve adjuster adjusts again the supply curve based on the power reduction quantity totaled by the reducible quantity collector.

3.  The operation planning system according to claim 1 or 2, wherein the reducible quantity information for each power consumption reduction characteristic is information on an estimated power quantity as being reducible based on a contract that has determined time slot and rate, and permits a reduction of the supply quantity at the determined rate in the determined time slot, and includes a number of contracted households in each contract form and a reduction power quantity.

4.  The operation planning system according to claim 1 or 2, wherein the reducible quantity information for each power consumption reduction characteristic is information on an estimated power quantity as being reducible based on a contract or a law that has determined a time slot and permits a reduction of a power supply to be zero in the determined time slot, and includes a number of households that accept a power-supply stop operation and a reduction power quantity.

5.  The operation planning system according to claim 1 or 2, wherein the reducible quantity information for each power consumption reduction characteristic is information on an estimated power quantity as being voluntarily reduced in response to an announcement that a status of power supply is tight, and includes a number of households with each response characteristic to the announcement and a reduction power quantity.

6.  The operation planning system according to claim 1 or 2, wherein the reducible quantity information for each power consumption reduction characteristic indicates an estimated power quantity as being voluntarily reduced in response to an announcement for a quantitative status of power supply, and includes a number of households with each response characteristic to the announcement and a reduction power quantity.

**7.** A method for creating an operation schedule, the method comprising:

storing in advance each pattern of a power demand curve;
combining power generation quantities of various power sources to create a power supply curve matching one of the patterns;
storing in advance pieces of environmental load information of the various power sources;
calculating, based on the environmental load information, an environmental load index to a supply quantity indicated by the supply curve;
storing, for each power consumption reduction characteristic of each consumer, reducible quantity information in advance;
calculating a necessary reduction quantity to cause the supply curve to match a predetermined curve;
calculating a reducible supply quantity based on the reducible quantity information;
calculating a reducible index obtained by dividing the reducible supply quantity by the necessary reduction quantity;
determining whether or not the environmental load index and the reducible index are both within respective certain ranges; and
adjusting the supply curve until a determination result to an effect that both indexes are within the respective certain ranges is obtained.

**8.** The operation schedule planning method according to claim 7, further comprising:

transmitting a power consumption quantity to be suppressed by the consumer to a terminal thereof connected with a network based on the supply curve; and
totaling practical power reduction quantities for the consumers and transmitted from the terminals thereof,
wherein in the adjustment of the supply curve, the supply curve is adjusted again based on the total power reduction quantity.

**9.** The operation schedule planning method according to claim 7 or 8, wherein the reducible quantity information for each power consumption reduction characteristic is information on an estimated power quantity as being reducible based on a contract that has determined time slot and rate and permits a reduction of the supply quantity at the determined rate in the determined time slot, and includes a number of contracted households in each contract form and a reduction power quantity.

**10.** The operation schedule planning method according to claim 7 or 8, wherein the reducible quantity information for each power consumption reduction characteristic is information on an estimated power quantity as being reducible based on a contract or a law that has determined a time slot and permits a reduction of a power supply to be zero in the determined time slot, and includes a number of households that accept a power-supply stop operation and a reduction power quantity.

**11.** The operation schedule planning method according to claim 7 or 8, wherein the reducible quantity information for each power consumption reduction characteristic is information on an estimated power quantity as being voluntarily reduced in response to an announcement that a status of power supply is tight, and includes a number of households with each response characteristic to the announcement and a reduction power quantity.

**12.** The operation schedule planning method according to claim 7 or 8, wherein the reducible quantity information for each power consumption reduction characteristic indicates an estimated power quantity as being voluntarily reduced in response to an announcement for a quantitative status of power supply, and includes a number of households with each response characteristic to the announcement and a reduction power quantity.

DEMAND
QUANTITY
SETTER ～1

～D

SUPPLY
QUANTITY
SETTER ～2

～S

SUPPLY
QUANTITY
ADJUSTER ～3

～S ～Ep ～Dp

PRESENTER ～4

*FIG. 1*

*FIG. 2*

*FIG. 3*

13

14

1

11

DEMAND QUANTITY
SETTER

INPUTTER → PATTERN
SELECTOR ← PATTERN
MEMORY

12 — DISPLAY

*FIG. 4*

DEMAND
QUANTITY

D

D

D

TIME

*FIG. 5*

| CONDITION | CHOICE |
|---|---|
| SEASON | SPRING |
| | SUMMER |
| | AUTUMN |
| | WINTER |
| CHARACTERISTIC OF DAY | WEEKDAY |
| | WEEKEND |
| | AVERAGE OF THREE DAYS MAXIMUM |
| CHARACTERISTIC OF DEMAND | NORMAL |
| | MAXIMUM DEMAND DAY |
| | MINIMUM DEMAND DAY |
| | MAXIMUM DIFFERENCE BETWEEN MAXIMUM DEMAND AND MINIMUM DEMAND |
| | MINIMUM DIFFERENCE BETWEEN MAXIMUM DEMAND AND MINIMUM DEMAND |
| WEATHER | MOSTLY SUNNY |
| | SUNNY |
| | CLOUDY |
| | RAINY |

## FIG. 6

D

2

## SUPPLY QUANTITY SETTER

| POWER SOURCE INFORMATION MEMORY | POWER SOURCE DISTRIBUTION DETERMINER |

22

21

S

# FIG. 7

| TIME | NUCLEAR | WATER | THERMAL | PV | WIND | POWER STORAGE |
|------|---------|-------|---------|-----|------|---------------|
| 1 | 30 | 8 | 3 | 0 | 0 | +3 |
| ... | | | | | | |
| 13 | 30 | 4 | 38 | 0 | 0 | +2 |
| ... | | | | | | |
| 23 | 30 | 5 | 15 | 0 | 1 | -3 |

## FIG. 8A

| TIME | NUCLEAR | WATER | THERMAL | PV | WIND | POWER STORAGE |
|------|---------|-------|---------|-----|------|---------------|
| 1 | 30 | 6 | 2 | 4 | 4 | +1 |
| ... | | | | | | |
| 13 | 30 | | 29 | 6 | 3 | +2 |
| ... | | | | | | |
| 23 | 35 | 2 | 10 | 0 | 2 | -5 |

## FIG. 8B

3

34

REDUCIBLE INDEX
CALCULATOR

REDUCIBLE QUANTITY
CALCULATOR

342

31

32

POWER-SOURCE-BY-
POWER-SOURCE-BASIC-
UNIT MEMORY

ENVIRONMENTAL
-LOAD-INDEX
CALCULATOR

NECESSARY
REDUCTION QUANTITY
CALCULATOR

341

CHARACTERISTIC
MEMORY

33

Ep

Dp

DETERMINER

35

POWER SOURCE
DISTRIBUTION
ADJUSTER

36

SUPPLY QUANTITY ADJUSTER

*FIG. 9*

| TIME | NUCLEAR | WATER | THER-MAL | PV | WIND | POWER STOR-AGE |
|------|---------|-------|----------|-----|------|---------------|
| 1 | 30 | 8 | 3 | 0 | 2 | +3 |
| ... | | | | | | |
| 13 | 30 | | 38 | 3 | 2 | +2 |
| ... | | | | | | |
| 23 | 30 | 5 | 15 | 0 | 1 | -3 |

## ENVIRONMENTAL LOAD INDEX

MONTH:X DAY:Y    247t-CO2/DAY,  250g-CO2/kWh

MONTH:X DAY:Y    14-15:00, 32t-CO2/DAY,  330g-CO2/kWh

## REDUCIBLE INDEX

MONTH:X  DAY:Y        REDUCED POWER QUANTITY IN AREA A: 2000 kWh, REDUCIBLE INDEX: 0.75

MONTH:Z  DAY:A        REDUCED POWER QUANTITY BY CONTRACT-FORM B HOUSEHOLDS: 5000 kWh, REDUCIBLE INDEX: 0.92

MONTH:Y  DAY:B        3-4:00, TOTAL REDUCED POWER QUANTITY: 8000 kWh, REDUCIBLE INDEX: 0.98

## FIG. 10

START

(S01)
SELECT PATTERN OF
DEMAND CURVE

(S02)
CREATE SUPPLY CURVE IN
ACCORDANCE WITH DEMAND
CURVE

(S03)
CALCULATE
ENVIRONMENTAL LOAD
INDEX OF SUPPLY CURVE

(S04)
CALCULATE REDUCIBLE
INDEX OF SUPPLY CURVE

(S05)
ENVIRONMENTAL LOAD INDEX
AND REDUCIBLE INDEX WITHIN
CERTAIN RANGES?  Yes

No

(S06)
CHANGE SUPPLY CURVE TO A
SUPPLY QUANTITY REDUCING
DIRECTION

(S07)
OUTPUT SUPPLY CURVE,
ENVIRONMENTAL LOAD INDEX, AND
REDUCIBLE INDEX ON SCREEN, ETC.

END

*FIG. 11*

DEMAND
QUANTITY
SETTER ~1

D

SUPPLY
QUANTITY
SETTER ~2

S

SUPPLY
QUANTITY
ADJUSTER ~3

S    Ep    Dp

TRANSMITTER ~5    PRESENTER ~4

COLLECTOR ~6

*FIG. 12*

## INTERNATIONAL SEARCH REPORT

International application No.

PCT/JP2012/078922

### A. CLASSIFICATION OF SUBJECT MATTER
*G06Q50/06*(2012.01)i, *H02J3/00*(2006.01)i, *H02J13/00*(2006.01)i

According to International Patent Classification (IPC) or to both national classification and IPC

### B. FIELDS SEARCHED

Minimum documentation searched (classification system followed by classification symbols)
G06Q50/06, H02J3/00, H02J13/00

Documentation searched other than minimum documentation to the extent that such documents are included in the fields searched
Jitsuyo Shinan Koho          1922–1996   Jitsuyo Shinan Toroku Koho   1996–2013
Kokai Jitsuyo Shinan Koho    1971–2013   Toroku Jitsuyo Shinan Koho   1994–2013

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2002-176729 A (Hitachi, Ltd.), 21 June 2002 (21.06.2002), entire text; all drawings (Family: none) | 1-12 |
| A | JP 2005-135206 A (Hitachi, Ltd.), 26 May 2005 (26.05.2005), entire text; all drawings & CN 1612435 A | 1-12 |
| A | JP 2010-197355 A (Toshiba Corp.), 09 September 2010 (09.09.2010), entire text; all drawings & WO 2010/098455 A1     & CN 102334037 A & US 2012/053848 A1 | 1-12 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 11 January, 2013 (11.01.13) | 22 January, 2013 (22.01.13) |

| Name and mailing address of the ISA/ Japanese Patent Office | Authorized officer |
|---|---|
| Facsimile No. | Telephone No. |

Form PCT/ISA/210 (second sheet) (July 2009)

## INTERNATIONAL SEARCH REPORT

| International application No. |
| --- |
| PCT/JP2012/078922 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2010-213420 A  (Toshiba Corp.),<br>24 September 2010 (24.09.2010),<br>entire text; all drawings<br>(Family: none) | 1-12 |
| A | JP 2010-211780 A  (Meidensha Corp.),<br>24 September 2010 (24.09.2010),<br>entire text; all drawings<br>(Family: none) | 1-12 |

Form PCT/ISA/210 (continuation of second sheet) (July 2009)

**EP 2 779 085 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010028879 A
- JP 2010124644 A
- JP 2009131045 A
- JP 2006288016 A